# FASCICULE DE BREVET EUROPEEN

(11) **EP 4 211 008 B1**
(45) Date de publication et mention de la délivrance du brevet: **22.05.2024**
(21) Numéro de dépôt: 21759104.9
(22) Date de dépôt: 26.07.2021
(51) Int. Cl.: B60W 30/12, B60W 30/18

(54) **PROCÉDÉ ET DISPOSITIF DE PARTITIONNEMENT D'UNE ZONE D'ÉLARGISSEMENT D'UNE VOIE DE CIRCULATION DÉLIMITÉE PAR DEUX BORDS**
VERFAHREN UND VORRICHTUNG ZUM AUFTEILEN EINES VON ZWEI RÄNDERN BEGRENZTEN, ERWEITERTEN BEREICHS EINER FAHRSPUR
METHOD AND DEVICE FOR PARTITIONING A WIDENED AREA OF A TRAFFIC LANE BOUNDED BY TWO EDGES

(30) Priorité: 10.09.2020 FR 2009153
(43) Date de publication de la demande: 19.07.2023
(73) Titulaire: Stellantis Auto SAS, 78300 Poissy (FR)
(72) Inventeur: VARNIER, Matthieu, 78320 LA VERRIERE (FR); GIRAUD, David, 92290 CHATENAY MALABRY (FR); LAHLOU, Zoubida, Lissasfa Casablanca, 20190 (MA)
(86) Numéro de dépôt international: PCT/FR2021/051391
(87) Numéro de publication internationale: WO 2022/053749

(56) Documents cités:
- FR-A1- 3 069 222
- US-A1- 2019 176 831

## Description

La présente invention revendique la priorité de la demande française 2009153 déposée le 10.09.2020.

L'invention concerne un procédé, un dispositif et un programme d'ordinateur de partitionnement d'une zone d'élargissement d'une voie de circulation délimitée par deux bords.

Il est connu que des véhicules, plus particulièrement automobile, sont propres à être conduit par un conducteur de façon automatisé sur une voie de circulation selon un chemin de référence, ladite voie de circulation est limitée latéralement par deux bords, un bord droit et un bord gauche. Les bords peuvent être des marquages au sol, parfois appelés lignes de rives. Également, les bords sont reconnaissables, par exemple, à l'aide d'un traitement d'images qui identifie par un changement de matériau, de couleur et/ou de texture du sol.

La délimitation longitudinale d'une voie de circulation est délimitée par une distance entre deux points, entre deux axes transversaux, entre une distance entre le début et la fin de la voie. Une zone, région, ou portion d'une voie de circulation est représentée par la surface de la voie de circulation délimitée latéralement et longitudinalement.

Une voie de circulation peut à un endroit donné se diviser en deux ou plusieurs voies. Cette multiplication des voies peut permettre à un véhicule, circulant sur ladite voie de circulation, de dépasser un autre véhicule qui le précède ou de se positionner sur le côté le plus adéquat par rapport à la circulation ou par rapport au trajet désiré par le conducteur du véhicule.

La zone d'élargissement d'une voie de circulation est délimitée longitudinalement par la région où la largeur de la voie augmente. Elle commence là où largeur de la voie commence à augmenter, donc après une voie initiale, et elle se termine là où un marquage marque la séparation des voies crées par l'élargissement de la voie initiale.

Des véhicules, en particulier automobile, circulent sur ces voies. Certains véhicules, conduit par un conducteur, sont propres à être conduit de façon automatisé selon un chemin de référence. Ils comprennent un dispositif d'aide au positionnement latéral par rapport aux délimitation latérales de la voie de circulation empruntée. Ce dispositif comprend des organes aptes à percevoir l'environnement (caméra, RADAR, LIDAR et autres télémètres) et en particulier le bord de la voie sur un horizon donné ou une distance donnée.

Il est connu que ces dits véhicules sont aptes à détecter le début d'une zone d'élargissement en surveillant la distance latérale entre les deux bords de la voie. Du fait de la limite de perception de l'environnement sur une distance donnée par les organes aptes à percevoir l'environnement, la détermination de la fin de la zone d'élargissement dès la détection du début de ladite zone d'élargissement n'est pas possible si le marquage, qui marque la séparation des voies crées par l'élargissement de la voie initiale, n'est pas détecté par ces dits organes. Il est connu que la détermination de la fin de la zone d'élargissement est réalisée au cours de la circulation dudit véhicule dans la zone d'élargissement, par exemple jusqu'à la détection d'un nouveau marquage qui marque la séparation des voies crées par l'élargissement de la voie initiale.

Certains dispositifs d'aide au positionnement latéral prennent comme chemin de référence la médiane aux bords de la voie de circulation. Lorsque c'est le cas, le véhicule sera mal positionné en fin de zone d'élargissement de voie de circulation. Il sera placé entre les deux nouvelles voies, donc au niveau du marquage de séparation qui sera créée entre ces deux voies. Le conducteur devra reprendre la main sur le dispositif et réaliser un déplacement latéral tardif avec un risque de heurt avec un autre véhicule réalisant un dépassement.

D'autres dispositifs d'aide au positionnement latéral prennent comme chemin de référence une distance fixe par rapport à un bord de la voie de circulation. Par contre, la trajectoire sélectionnée peut ne pas être la trajectoire souhaitée par le conducteur. Le choix de la voie de circulation finale par le dispositif d'aide au positionnement latéral, à l'issu de l'élargissement et de la séparation en au moins deux voies, sera vu comme arbitraire du point du vu du conducteur. Il devra alors le cas échéant suspendre l'assistance dans la zone d'élargissement afin de reprendre la main sur la conduite puis réactiver l'assistance après la fin de la zone d'élargissement.

Par ailleurs, ces dits dispositifs ne permettent pas de prendre en compte plusieurs chemins de référence dans la zone d'élargissement.

On connait par le document US2019/176831 un dispositif et un procédé de commande de changement de voie d'un véhicule. On connait par le document FR3069222 un procédé de fonctionnement d'un système d'assistance à la conduite du type assistance au centrage d'un véhicule dans une voie de circulation.

Un objet de la présente invention est d'améliorer le confort, la pertinence (caractère intuitif), et la sécurité de dispositifs d'aide à la conduite.

Elle propose plus précisément à cet effet un procédé de partitionnement d'une zone d'élargissement d'une voie de circulation délimitée par deux bords selon la revendication 1.

Selon le procédé, un véhicule est propre à être conduit par un conducteur de façon automatisé selon un chemin de référence circulant sur ladite voie de circulation, ledit véhicule comprenant une aide au positionnement latéral par rapport au chemin de référence, le dit procédé comportant les étapes :
- détection d'une prochaine division de ladite voie de circulation en au moins deux nouvelles voies ;
- détermination de la zone d'élargissement de ladite voie de circulation ;
- détermination, dans ladite zone d'élargissement, des chemins de référence aptes à atteindre chaque nouvelle voie ;
- calcul d'une distance longitudinale par rapport au début de ladite zone d'élargissement, la dite distance longitudinale est fonction des chemins de référence et des bords ;
- détermination d'une première sous zone de ladite zone d'élargissement comprise entre le début de ladite zone d'élargissement et la dite distance longitudinale, la détermination de la deuxième sous zone correspond au complément de la dite première sous zone par rapport à la zone d'élargissement.

Ainsi, plusieurs chemins de références sont déterminés. Selon le chemin de référence sélectionné, le véhicule est apte à atteindre, de façon automatisé, chaque nouvelle voie après la zone d'élargissement. Cependant, plus le véhicule est proche de la fin de la zone d'élargissement, plus un changement de chemin de référence, et donc une modification de la trajectoire du véhicule, sera dangereux (risque de collision avec un autre véhicule par exemple).

Il est alors nécessaire de partitionner, délimiter, la zone d'élargissement en deux sous zones. Avoir une première sous zone qui représente une région où sensiblement la distance latérale entre les chemins de référence est faible, et une deuxième sous zone, représente une région où la distance latérale entre les chemins de référence devient de plus en plus importante.

La délimitation des sous zones est fonction des chemins de références et des bords. Cela rend aussi possible de délimiter (partitionner) de façon précise et systématique en deux sous zones distinctes la zone d'élargissement de la voie de circulation. Cette délimitation est réalisée le véhicule roulant et peut être réactualisée pendant que le véhicule est dans la zone d'élargissement si de nouveaux éléments sont détectés ou précisés comme la fin de la zone d'élargissement.

Dans un mode de réalisation, cette fonction dépend de l'écart latéral entre les bords et/ou les chemins de référence.

Ce partitionnement présente le meilleur compromis entre le coût et la complexité des dispositifs de perception de l'environnement à prévoir, apportant ainsi des effets positifs sur le confort et la sécurité.

Avantageusement, la distance longitudinale est fonction d'au moins un élément parmi :
- La géométrie du véhicule ;
- La géométrie de la voie de circulation ;
- Une marge, un décalage, et/ou une valeur prédéterminée ;
- La vitesse du véhicule ;
- Les conditions de circulations.

La prise en compte de ces éléments contribue, d'une part, à l'amélioration du confort par un meilleur calcul du chemin de référence, et, d'autre part, à l'amélioration du sentiment de sécurité par un partitionnement adapté aux incertitudes et au contexte de la circulation.

Prendre en compte la géométrie du véhicule (par exemple largeur, longueur) et la géométrie de la voie de circulation, en particulier la demie largeur de la voie de circulation (dite voie de circulation initiale, ou voie de circulation amont) juste avant la zone d'élargissement, améliore le calcul des chemins des références (précision, lissage).

Prendre en compte une marge, un décalage, et/ou une valeur prédéterminée, comme la largeur de voie théorique ou le côté de circulation, rend plus robuste le calcul de la distance longitudinale par rapport aux incertitudes liés aux mesures des capteurs de perception. Selon des choix de conception, une valeur prédéterminée type la fonction d'aide à la conduite en la rendant plus ou moins sportive, plus ou moins confortable, ...

Prendre en compte la vitesse du véhicule, ou des états liés à la dynamique véhicule comme son positionnement, ses vitesses et accélérations, ainsi que prendre en compte les conditions de circulation permettent d'adapter le calcul de la distance longitudinale en fonction de la circulation.

Avantageusement, la détermination de la zone d'élargissement est réactualisée tant que le véhicule n'a pas quitté la zone d'élargissement. Il n'est pas nécessaire de connaître ou d'identifier la fin de la zone d'élargissement pour pouvoir déterminer les chemins de références. Ceux-ci peuvent être déterminés que selon l'horizon visible des capteurs de perception de l'environnement. Ainsi, il n'est pas nécessaire de connaître et/ou identifier la fin de la zone d'élargissement pour pouvoir déterminer la première sous zone.

Avantageusement, le premier chemin de référence est déterminé à partir d'un des deux bords de la voie de circulation, et le deuxième chemin de référence est déterminé à partir de l'autre bord des deux bords de la voie de circulation. Ainsi, le procédé est facilement adaptable selon le coté de circulation droite ou gauche, et cela demande moins de ressources de calcul pour implémenter le procédé. Par circulation à droite, respectivement à gauche, on entend les zones géographiques où la législation impose une circulation du côté droit, respectivement gauche, sur la voie hors dépassement ou changement de voie.

Avantageusement, le calcul de la distance longitudinale par rapport au début de ladite zone d'élargissement est fonction de la largeur de la voie par rapport à la largeur du véhicule. Ainsi, cela demande moins de ressources de calcul pour implémenter le procédé.

Lorsque le véhicule est dans la première sous zone, le procédé comporte en outre une étape de sélection d'un premier chemin de référence parmi les chemins de référence déterminés, la sélection est faite à partir d'informations acquises par au moins un capteur dudit véhicule, et, lorsque le véhicule est dans la deuxième sous zone, le procédé comporte en outre une étape de sélection d'un deuxième chemin de référence parmi les chemins de références déterminés, la sélection est faite uniquement à partir d'au moins une action sur le volant par le conducteur.

Ainsi dans la première sous zone, où la distance latérale entre les chemins de référence est proche, il est possible d'adapter les aides à la conduite, comme le positionnement latéral, en fonction de l'environnement perçu sans compromettre le confort ou la sécurité ressentie par le conducteur et/ou les passagers. Le véhicule va pouvoir changer de voie de manière automatique sans action sensible du conducteur sur le volant (variation de rotation du volant ou du couple volant supérieur à un seuil prédéterminé).

Dans la première sous zone, la largeur de la voie reste suffisamment faible pour éviter d'être dépassé par un autre véhicule. Ainsi, il n'y a que très peu de risque d'un heurt lors de la modification automatique de positionnement latérale. Il n'est pas utile de suréquiper le véhicule avec des capteurs supplémentaires pour mesurer et analyser en temps réel ce qui se passe derrière le véhicule.

Par contre, si le véhicule est dans le deuxième sous zone, l'adaptation d'aides à la conduite, comme le positionnement latéral, ne doit se faire que sur une action du conducteur (et non simplement une contrainte de l'environnement. Le conducteur prend alors de fait la responsabilité du changement de trajectoire, notamment vis-à-vis du risque accru de collision). Ce changement de trajectoire de référence, sur action du conducteur et par le conducteur, est alors facilement compréhensible - puisqu'initié par l'usager- évitant ainsi un sentiment d'insécurité. Avantageusement, une information acquise par au moins un capteur dudit véhicule est le côté activé du clignotant, un autre véhicule précédant et roulant plus lentement que ledit véhicule, une vitesse dudit véhicule inférieure à une consigne du véhicule, et/ou la position latérale dudit véhicule dans la zone d'élargissement de ladite voie de circulation, et, une action sur le volant par le conducteur est une rotation du volant et/ou un couple de rotation appliqué sur le volant.

Lorsque le conducteur détecte une division, il peut vouloir que son véhicule aille sur une des nouvelles voies. Par exemple, il peut vouloir dépasser un véhicule précédent le sien.

Dans la cas d'une aide au positionnement dans la voie, dans la première sous zone, il est possible de changer automatiquement de chemin de référence selon la circulation perçue par les capteurs d'environnement ou selon des instructions du conducteur (comme par exemple une activation du clignotant et/ou d'un bouton). C'est un moyen simple pour que le conducteur indique, dans la première sous zone, sur quelle voie, égo-voie ou voie adjacente, il souhaite que le véhicule doit être en fin de la zone d'élargissement (donc début de la zone aval). Le conducteur lève donc l'incertitude de la sélection du chemin de référence sans action sur le volant (variation de l'angle de rotation du volant et/ou du couple sur le volant inférieure à un seuil prédéterminé).

Par contre dans la deuxième sous zone, à moins d'engendrer un inconfort et un sentiment d'insécurité, le conducteur doit réaliser un action significative (angle et/ou vitesse de rotation minimum du volant, appliquer un couple volant au-delà d'un seuil, ...) afin de changer de trajectoire de référence.

Dans un mode de réalisation, un véhicule conduit de façon automatisé peut être régulé en vitesse par rapport à une vitesse consigne. En zone amont de la zone d'élargissement, le véhicule peut être régulé à une vitesse inférieure à la vitesse consigne à cause de la détection d'un véhicule le précédent et roulant plus lentement. L'arrivé dans une zone d'élargissement permet justement le dépassement d'un véhicule plus lent. Lorsque le véhicule est dans la zone d'élargissement, le procédé peut choisir le chemin de référence permettant de dépasser le véhicule qui précède de manière confortable (transition lisse) et sécuritaire.

Dans un autre mode de réalisation, la vitesse consigne en zone amont peut être différente de la vitesse consigne en zone aval de la zone d'élargissement. Suivant l'écart en la vitesse du véhicule et les vitesse consignes, la sélection du chemin de référence est différente : par exemple sélectionner le chemin de référence de l'égo-voie si la vitesse consigne en zone aval est plus faible que la vitesse du véhicule (exemple arrivée à une barrière de péage sur autoroute), et sélectionner le chemin de référence de la voie adjacente si la vitesse de consigne en zone amont est plus forte que la vitesse véhicule (exemple voie d'accélération pour pouvoir doubler).

L'invention concerne aussi un dispositif de partitionnement d'une zone d'élargissement d'une voie de circulation délimitée par deux bords, ledit dispositif comprenant une mémoire associée à au moins un processeur configuré pour mettre en oeuvre le procédé de l'invention.

L'invention concerne aussi un véhicule caractérisé en ce qu'il comprend le dispositif de partitionnement d'une zone d'élargissement d'une voie de circulation délimitée par deux bords.

L'invention concerne aussi un programme d'ordinateur comprenant des instructions adaptées pour l'exécution des étapes du procédé de partitionnement d'une zone d'élargissement d'une voie de circulation délimitée par deux bords selon l'invention lorsque ledit programme est exécuté par au moins un processeur.

D'autres caractéristiques et avantages de l'invention ressortiront de la description des modes de réalisation non limitatifs de l'invention ci-après, en référence aux figures annexées, sur lesquelles :
[Fig. 1] illustre schématiquement un véhicule selon un exemple de réalisation particulier de la présente invention.
[Fig. 2] illustre schématiquement un partitionnement d'une zone d'élargissement d'une voie de circulation selon un exemple de réalisation particulier de la présente invention.
[Fig. 3] illustre schématiquement un procédé de partitionnement, selon un exemple particulier de réalisation de la présente invention.
[Fig. 4] illustre schématiquement un calculateur, selon un exemple particulier de réalisation de la présente invention.

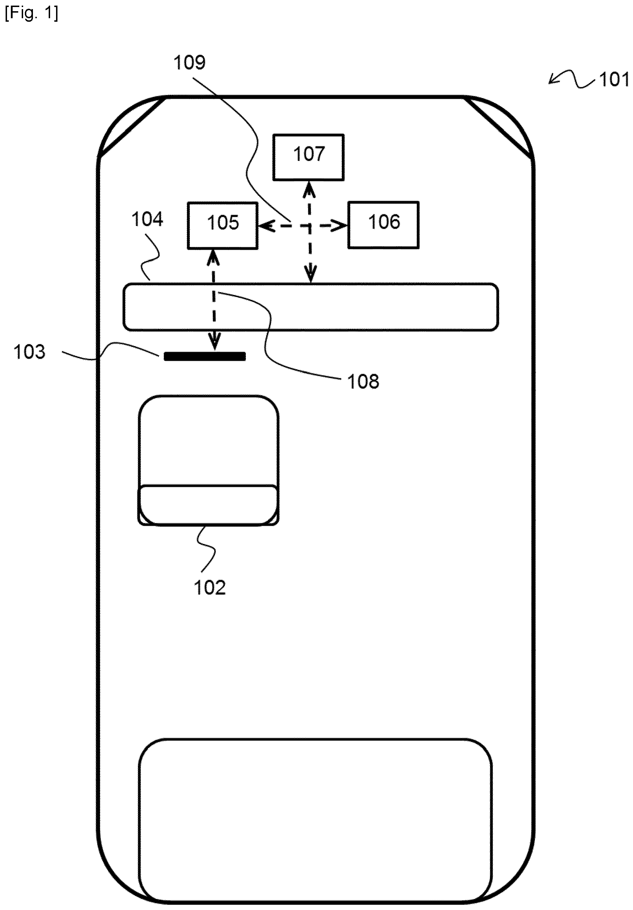

La **figure 1** montre un véhicule 101 où un fauteuil 102, un volant 103, un tableau de bord 104 et une ceinture de sécurité (non représentée) constituent le poste de conduite. Selon un mode de réalisation, le tableau de bord 104 comporte un cockpit, un système multimédia apte à afficher des informations audio-visuelles, un système d'affichage tête haute et/ou un système de climatisation/ventilation. Les places des passagers ne sont pas représentées.

Selon un autre mode de réalisation le volant 103 et/ou le tableau de bord 104 comporte au moins un boitier, commodo, qui regroupe différentes commandes d'un véhicule automobile : klaxon, clignotant, essuie-glace, feux de route, feux de croisement, feux de position, activation/désactivation d'aides à la conduite comme régulateur de vitesse, aide au positon de voie, etc., réglages et ou de paramétrage d'aides à la conduite, ....

Dans un mode de réalisation, le véhicule 101 comporte des organes d'aide à l'assistance à la direction 105 aptes à mesurer ou à estimer un angle/vitesse/rotation/couple volant à partir d'une action sur le volant par le conducteur. Ces organes sont également aptes à mesures et/ou estimer des déplacements/vitesses/accélérations linéaire ou angulaire et/ou à mesurer et/ou estimer des efforts sur le système de direction (volant, colonne, pignon, crémaillère, biellette, joints, pneus ...).

Ces organes 105 sont également aptes à piloter l'assistance de direction afin de pouvoir participer à un système d'aide au positionnement latérale.

Dans un mode de réalisation, ces organes 105 sont de type Direction à Assistance Electronique, de type à assistance hydraulique et/ou de type « by-wire » (Il y a une absence de lien mécanique directe entre le volant et les pneus).

Le véhicule 101 comporte des organes 106 aptes à conduire le véhicule 101 de façon automatisé selon un chemin de référence sur une voie de circulation. En particulier, ces organes 106 proposent au conducteur du véhicule une aide au positionnement latéral par rapport à un chemin de référence. Dans un mode de réalisation, ces organes 106 comprennent des moyens pour percevoir l'environnement du véhicule. Ces moyens peuvent traiter des ondes lumineuses (caméra, laser, lidar ...), des ondes radio fréquences (RADAR, Wifi, 4G, 5G, xG ...) et des ondes acoustiques (ultrasons, ...). Ces organes 106 sont alors aptes à communiquer avec l'extérieur du véhicule (avec d'autres véhicule, avec des objets connectés comme par exemple un téléphone, un ordinateur ..., avec des stations sur le bord de la route, avec des serveurs, ...). En particulier, ces organes 106 peuvent reconnaître une voie de circulation, les bords de route et les marquages au sol, les objets (piéton, cycliste, automobile, camion ...) circulant aux abords ou sur la voie de circulation autour du véhicule ;

Le véhicule 101 comporte au moins un dispositif 107, calculateur par exemple, comprenant une mémoire associée à au moins un processeur configuré pour mettre en oeuvre l'invention.

Le dispositif 107 conduit de façon automatisé le véhicule 101 sur une voie de circulation selon un chemin de référence. Le dispositif 107 comportent des organes de perception de l'environnement, d'interfaces homme-machine, et de contrôle du véhicule 101.

Les organes de perception de l'environnement sont aptes à :
- percevoir l'environnement extérieur ou routier à l'aide des organes de type RADAR, LIDAR, ultrason, laser, acquisition d'images/vidéo, ou autres télémètres ;
- percevoir l'environnement intérieur du véhicule 101 à l'aide d'organes de type capteurs de positions, caméra, dispositifs de surveillance du conducteur et/ou des passagers.

Les organes d'interface homme-machine sont aptes à :
- communiquer avec le conducteur et/ou les passagers afin de soit informer les occupants dudit véhicule 101, soit de recevoir des volontés ou des ordres des occupants dudit véhicule 101 ;
- communiquer avec les autres véhicules, avec l'infrastructures, avec des personnes hors du véhicule 101 à l'aide de communications dites V2X basées sur des technologies sans fils comme le WIFI, la 4G, la 5G, afin de soit informer soit de recevoir des informations des autres véhicules, de l'infrastructure et/ou avec des personnes hors dudit véhicule 101.

Les organes de contrôle du véhicule 101 sont aptes à contrôler, commander ou réguler :
- la dynamique longitudinale, transversale et/ou verticale dudit véhicule 101 (par exemple, ces organes peuvent être des freins, la direction les suspensions, le moteur, ...) ;
- le confort et la sécurité du véhicule 101.

Des canaux de communications 108 et 109 illustrent en partie les communications et échanges d'information sur un réseau informatique de type filaire comme les réseaux CAN, FlexRay, Ethernet, ..., de type optique, ou de type radiofréquence comme le wifi, 4G, 5G, ... Ces canaux de communications permettent les échanges d'informations entre le dispositif 107 et les autres organes (fauteuil 102, ceinture de sécurité, volant 103, tableau de bord 104, système multi média, voyants, écrans, climatisation/ventilation, organes d'aide à l'assistance à la direction 105, organes 106 aptes à conduire le véhicule 101 et tout dispositif 107 participant à la mise en oeuvre de l'invention).

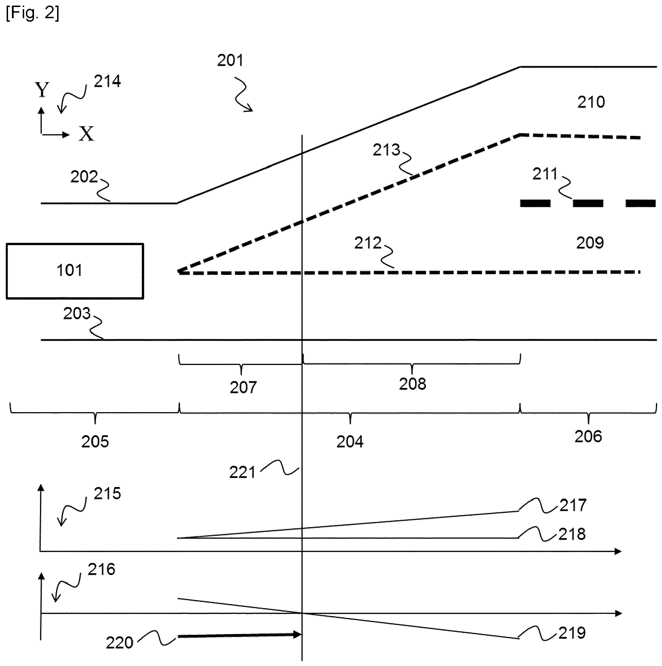

La **figure 2** montre le véhicule 101 circulant sur une voie de circulation 201 délimitée par deux bords, un bord gauche 202 et un bord droit 203.

La voie de circulation 201 est découpée en plusieurs zones. Une première zone 204 correspondant à la zone d'élargissement de la voie de circulation. Une zone amont 205 correspondant à la zone de la voie de circulation en amont de la zone d'élargissement 204. La voie de circulation en amont de la zone d'élargissement 204 est également dite voie initiale. Une zone aval 206 correspondant à la zone de la voie de circulation en aval de la zone d'élargissement 204. Le début de la zone d'élargissement 204 correspond à la fin de la zone amont 205. La fin de la zone d'élargissement 204 correspond au début de la zone aval.

La zone d'élargissement 204 est partitionnée en deux sous zones, une première sous zone 207 et une deuxième sous zone 208. La figure 2 montre une ligne de partitionnement sépare la première sous zone 207 de la deuxième sous zone 208.

La zone 206 en aval de la zone d'élargissement 204 est divisée en deux voies, dont une égo-voie 209 et une voie adjacente 210. La ligne 211 représente un marquage au sol séparant l'égo-voie 209 de la voie adjacente 210.

La figure 2 montre également le chemin de référence 212 pour atteindre l'égo-voie, et le chemin de référence 213 pour atteindre la voie adjacente.

La figure 2 montre trois repères 214, 215, 216. Le repère 214 donne un sens longitudinal et transversal permettant de réaliser les calculs de distance.

Un résultat du calcul d'une la première distance latérale 217 entre le chemin de référence de la voie adjacente 213 et le bord droit 203 de la voie de circulation est représenté dans le repère 215. Un résultat du calcul d'une deuxième distance latérale 218 entre le chemin de référence de l'égo-voie 212 et le bord droit 203 de la voie de circulation est également représenté dans le repère 215.

Dans le repère 216, un segment 219 représente le résultat d'une fonction de la première distance latérale 217 et de la deuxième distance latérale 218. A titre d'illustration, cette fonction est la somme de la deuxième distance latérale 218, d'une demie largeur de la voie initiale, et de l'opposé (signe inverse) de première distance latérale 217. La longueur d'un vecteur 220 représente le calcul de la distance longitudinale par rapport au début de ladite zone d'élargissement. Un trait 211 illustre la distance longitudinale reportée sur la zone d'élargissement 204.

La première sous zone 207, appartenant à la zone d'élargissement 204, est ainsi limitée transversalement par les bords 202 et 203, et est limitée longitudinalement par le début de la zone d'élargissement 204 et le trait 211.

Dans la figure 2, le chemin de référence utilisé par l'aide au positionnement latéral avant la zone d'élargissement n'est pas représenté.

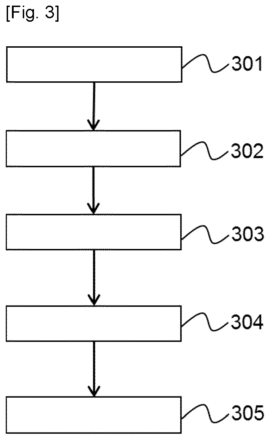

La **figure 3** illustre schématiquement un procédé de partitionnement d'une zone d'élargissement 202 d'une voie de circulation 201 délimitée par deux bords 202, 203, selon un exemple particulier de réalisation de la présente invention. Un véhicule 101 propre à être conduit par un conducteur de façon automatisé selon un chemin de référence circule sur ladite voie de circulation, ledit véhicule comprend une aide au positionnement latéral par rapport au chemin de référence.

L'étape 301 détecte une prochaine division de la voie de circulation en au moins deux nouvelles voies, dont une égo-voie 209 et une voie adjacente 210.

Avantageusement, la détection est réalisée à partir des moyens pour percevoir l'environnement. Dans un mode de réalisation, le traitement d'images acquises par une caméra permet d'identifier, reconnaître et localiser le marquage au sol. La largeur de voie sur laquelle circule le véhicule sur un horizon est déterminée. La surveillance de la variation de la largeur de la voie est un indicateur de division de la voie. Egalement, le suivi du marquage au sol permet d'identifier une division de la voie avec l'apparition d'un marquage supplémentaire.

Avantageusement, la combinaison de mesures provenant de différents moyens pour percevoir l'environnement et de moyens pour se localiser (GPS associé à une cartographie par exemple) rend plus robuste la détection.

L'étape 302 détermine la zone d'élargissement 204 de la voie de circulation 201. Avantageusement, avec l'identification de marquage au sol et des bords de la voie et avec la surveillance de la largeur de la voie, la zone d'élargissement 204 est déterminée. Dans un mode de réalisation, cette détermination est consolidée et finalisée alors que le véhicule est dans la zone d'élargissement. Dans un autre mode de réalisation, cette détermination est réalisée le véhicule roulant. Cette détermination est réactualisée pendant que le véhicule est dans la zone d'élargissement 204 lorsque de nouveaux éléments sont détectés comme un nouveau marquage marquant la séparation des voies crées par l'élargissement de la voie. Dans un autre mode de réalisation, la zone d'élargissement 204 est entièrement déterminée dès le début de l'entrée de cette zone à l'aide de dispositif de localisation associées à des cartographies, ou données géométrique, de la voie.

L'étape 303 détermine, dans ladite zone d'élargissement 204, des chemins de référence 212, 213 aptes à atteindre chaque nouvelle voie 209, 210. Dans un mode de réalisation, un chemin de référence 212 est déterminé pour atteindre l'égo-voie 209, et un autre chemin de référence 213 est déterminé pour atteindre la voie adjacente 210. Par égo-voie, on entend la voie préférentielle ou par défaut de l'aide au positionnement latéral lors d'une division de voie. Généralement, c'est la voie de droite en cas de circulation à droite ou la voie de gauche en cas de circulation à gauche. La voie adjacente est la voie à côté de l'égo-voie.

Selon un mode de réalisation, un chemin de référence 2112, 213 dans la zone d'élargissement 204 menant à une des voies 209, 210 issues de la division de la voie courante, peut être crée comme le chemin le plus court entre le chemin de référence de la voie juste avant la zone d'élargissement et le chemin de référence de la nouvelle voie après la zone d'élargissement.

Selon un autre mode de réalisation le chemin de référence est le plus court chemin qui respecte la courbure de la route et/ou des critères de planification de trajectoire (moindre distance, moindre accélération, moindre consommation, ...).

Selon un autre mode de réalisation, un premier chemin de référence est déterminé à partir du bord droit de la voie de circulation. A titre d'illustration, cette détermination peut correspondre à un écart transversal d'une demie largeur de la voie initiale par rapport au bord de la voie de circulation. Si la largeur de la voie la plus à droite parmi les nouvelles voies créées en sortie de la zone d'élargissement est identique à la largeur de la voie initiale, le premier chemin de référence relie le centre de la voie initiale au centre la voie la plus à droite parmi les nouvelles voies créées en sortie de la zone d'élargissement tout en respectant la courbure de la route.

Selon un autre mode de réalisation, un deuxième chemin de référence est déterminé à partir du bord gauche de la voie de circulation. A titre d'illustration, cette détermination peut correspondre à un écart d'une demie largeur de la voie initiale par rapport au bord gauche de la voie de circulation. Si la largeur de la voie la plus à gauche parmi les nouvelles voies créées en sortie de la zone d'élargissement est identique à la largeur de la voie initiale, le deuxième chemin de référence relie le centre de la voie initiale au centre la voie la plus à gauche parmi les nouvelles voies créées en sortie de la zone d'élargissement tout en respectant la courbure de la route.

Selon un autre mode de réalisation le chemin de référence pour atteindre l'égo-voie 209 est fonction du bord le plus proche de l'égo-voie. En particulier, le chemin de référence pour atteindre l'égo-voie 209 est une distance fixe, par exemple la demie largeur de la voie initiale, par rapport à la voie de droite en cas de circulation à droite et la voie de gauche en cas de circulation à gauche. Dans ce cas, il n'est pas nécessaire de reconnaître et/ou d'identifier l'avance la fin de la zone d'élargissement. Ce chemin de référence est déterminé aussi loin que sont détectés les bords de la voie de circulation.

Selon un autre mode de réalisation le chemin de référence pour atteindre la voie adjacente 210 est fonction du bord le plus proche de la voie adjacente. En particulier, le chemin de référence pour atteindre la voie adjacente 210 est une distance fixe, par exemple la demie largeur de la voie initiale, par rapport à la voie de gauche en cas de circulation à droite et la voie de droite en cas de circulation à gauche.

L'étape 304 comporte calcul d'une distance longitudinale par rapport au début de ladite zone d'élargissement, ladite distance longitudinale est fonction des chemins de référence 212, 213 et des bords 202, 203.

Dans un mode de réalisation, un des bords 202, 203 de la voie de circulation est sélectionné, par exemple le bord 202. Une première distance latérale 217 est calculée à partir d'un premier chemin de référence et du bord 202 sélectionné, cela correspond à l'écart latéral entre le premier chemin de référence et le bord 202 sélectionné. Une deuxième distance latérale 218 est calculée à partir du deuxième chemin de référence 213 et du bord 202 sélectionné. Cela correspond à l'écart latéral entre le deuxième chemin de référence 213 et le bord 202 sélectionné. Dans ce mode particulier, illustré sur la figure 2, la distance longitudinale est définie lorsque la différence entre la deuxième distance latérale 218 et la première distance latérale 217 et augmenté d'un décalage comme la demie largeur de la voie initiale devient négative.

Avantageusement, cette distance longitudinale est fonction de la géométrie du véhicule et en particulier de la largeur du véhicule. La distance longitudinale peut être plus grand pour un véhicule plus large. Un véhicule plus large dans la zone d'élargissement 204 laisse moins de place pour être dépassé.

Avantageusement, cette distance longitudinale est fonction de la géométrie de la voie de circulation. Par exemple en cas de variation non constant de la largeur voie de circulation la distance longitudinale devra être adaptée voire réduite à zéro.

Avantageusement, cette distance longitudinale est fonction d'une marge, d'un décalage et/ou d'au moins une valeur prédéterminée. Dans un cas particulier, la distance longitudinale est définie lorsque la différence entre la première distance latérale 217 et la deuxième distance latérale 218 dépasse un seuil. Cela prend en compte des incertitudes sur les mesures utilisées pour les étapes de détection, de détermination et de calcul de l'invention. Dans un autre mode de réalisation, suivant la valeur prédéterminée, le procédé est plus ou moins réactif.

Avantageusement, cette distance longitudinale est fonction de la vitesse (position, accélération et/ou jerk) du véhicule. En particulier, une modification d'une aide à la conduite dans la première sous zone sera plus ressentie par le conducteur pouvant donner une impression d'inconfort ou de manque de sécurité.

Avantageusement, cette distance longitudinale est fonction des conditions de circulation. En particulier, lors de circulation dense, il est préférable de réduire la première sous zone 207.

L'étape 305 détermine une première sous zone 207 de la zone d'élargissement 204 comprise entre le début de la zone d'élargissement 204 et ladite distance longitudinale. La détermination de la deuxième sous zone 208 correspond au complément de la première sous zone 207 par rapport à la zone d'élargissement 204. Avantageusement, la sous zone 207 est la première partie longitudinale de la zone d'élargissement.

Lorsque le véhicule 101 est dans la première sous zone 207, le procédé comporte en outre une étape de sélection d'un premier chemin de référence parmi les chemins de références déterminés, la sélection est faite à partir d'informations acquises par au moins un capteur du véhicule 101. Lorsque le véhicule 101 est dans la première sous zone 207, au moins deux chemins de références ont été déterminées : le chemin de référence pour atteindre l'égo-voie 212, et le chemin de référence pour atteindre la voie adjacente 213. Le procédé est ainsi apte à changer de chemin de référence ce qui entraine un changement de la trajectoire que va prendre le véhicule lorsque l'aide au positionnement latéral est activée.

Une information acquise par au moins un capteur dudit véhicule est le côté activé du clignotant, un autre véhicule précédant et roulant plus lentement que ledit véhicule, une vitesse dudit véhicule inférieure à une consigne du véhicule, et/ou la position latérale dudit véhicule dans la zone d'élargissement de ladite voie de circulation. Ainsi, le positionnement latéral du véhicule sera différent en sortie de la première zone 207, sans action sensible (un angle volant, une vitesse de rotation volant, et/ou un couple volant mesuré inférieur à un seuil) sur le volant par le conducteur.

Lorsque le véhicule 101 est dans la deuxième sous zone 208, le procédé comporte en outre une étape de sélection d'un deuxième chemin de référence parmi les chemins de références déterminés212, 213, la sélection est faite uniquement à partir d'au moins une action sur le volant par le conducteur. En particulier, changer le positionnement latéral dans le deuxième sous zone 208 pour suivre un chemin de référence différent sans action du conducteur est inconfortable (transition brusque) et risqué (non prise en compte de la circulation venant par derrière). C'est au conducteur de prendre le contrôle du positionnement latéral du véhicule en exerçant sensiblement un couple sur le volant et/ou une rotation du volant.

Également, avantageusement, cette étape peut être activée plusieurs fois pour pouvoir changer la sélection du chemin de référence en fonction de nouvelles actions sur le volant par le conducteur.

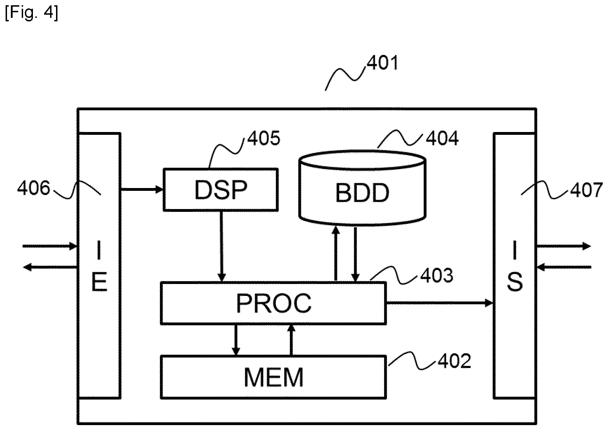

La **figure 4** représente un exemple de dispositif 401 de calculateur 107. Ce dispositif 401 peut être utilisé en tant que dispositif apte à mettre en oeuvre les étapes du procédé selon l'invention. Ce dispositif 401 peut prendre la forme d'un boitier comprenant des circuits imprimés, de tout type d'ordinateur ou encore d'un téléphone mobile.

Le dispositif 401 comprend une mémoire vive (MEM) 402 pour stocker des instructions pour la mise en oeuvre par un processeur (PROC) 403 du procédé de supervision tel que décrit ci-avant. Le dispositif 401 comporte aussi une mémoire de masse (BDD) 404 pour le stockage de données destinées à être conservées après la mise en oeuvre du procédé.

Le dispositif 401 peut en outre comporter un processeur de signal numérique (DSP) 405. Ce DSP 405 reçoit des signaux numériques relatifs à des données pour mettre en forme, démoduler et amplifier, de façon connue en soi ces données.

Le dispositif 401 comporte également une interface d'entrée 406 pour la réception des données relevées par les capteurs du volant 103 du tableau de bord 104, du système d'assistance de direction 105, des organes 106 aptes à conduire le véhicule 101 de façon automatisé selon un chemin de référence sur une voie de circulation 201, et/ou du dispositif 107 qui comporte des organes de perception de l'environnement, d'interfaces homme-machine, et de contrôle du véhicule 101.

Le dispositif 401 comporte une interface de sortie 407 pour la transmission des données et informations calculées et/ou transformé par le procédé.

La présente invention ne se limite pas aux formes de réalisation décrites ci-avant à titre d'exemples ; elle s'étend à d'autres variantes. En particulier, elle s'adapte dans le cas de division de plus de deux voies telle que, par exemple, à l'arrivée d'une zone de péage autoroutier.

## Revendications

1. Procédé de partitionnement d'une zone d'élargissement (202) d'une voie de circulation (201) délimitée par deux bords (202, 203), le procédé étant mis en oeuvre par un dispositif (401), le dispositif conduisant de façon automatisé un véhicule (101), le véhicule étant propre à être conduit par un conducteur, selon un chemin de référence, ledit véhicule circulant sur ladite voie de circulation, ledit véhicule comprenant une aide au positionnement latéral par rapport au chemin de référence, le dit procédé comportant les étapes :
• détection (301) d'une prochaine division de ladite voie de circulation en au moins deux nouvelles voies (209, 210) ;
• détermination (302) de la zone d'élargissement (204) de ladite voie de circulation ;
• détermination (303), dans ladite zone d'élargissement (204), des chemins de référence (212, 213) aptes à atteindre chaque nouvelle voie (209, 210) ;
• calcul (304) d'une distance longitudinale par rapport au début de ladite zone d'élargissement (204), la dite distance longitudinale est fonction des chemins de référence (212, 213) et des bords (202, 203) ;
• détermination (305) d'une première sous zone (207) de ladite zone d'élargissement (204) comprise entre le début de ladite zone d'élargissement et ladite distance longitudinale, ladite première sous zone (207) étant limitée transversalement par les bords (202 et 203), et détermination d'une deuxième sous zone (208) correspondant au complément de la dite première sous zone (207) par rapport à la zone d'élargissement (204) ;
le procédé étant **caractérisé en ce que** lorsque le véhicule (101) est dans la première sous zone, le procédé comporte en outre une étape (305) de sélection d'un premier chemin de référence parmi les chemins de référence déterminés (212, 213), la sélection étant faite à partir d'informations acquises par au moins un capteur dudit véhicule, une information acquise par au moins un capteur dudit véhicule est un côté activé du clignotant, un autre véhicule précédant et roulant plus lentement que ledit véhicule, une vitesse dudit véhicule inférieure à une consigne du véhicule, et/ou une position latérale dudit véhicule dans la zone d'élargissement de ladite voie de circulation ;
lorsque le véhicule (101) est dans la deuxième sous zone (208), le procédé comporte en outre une étape (306) de sélection d'un deuxième chemin de référence parmi les chemins de références déterminés (212, 213), la sélection est faite uniquement à partir d'au moins une action sur le volant par le conducteur, une action sur le volant par le conducteur est une rotation du volant et/ou un couple de rotation appliqué sur le volant.

2. Procédé de partitionnement d'une zone d'élargissement (204) d'une voie de circulation (201) délimitée par deux bords (202, 203) selon la revendication 1 dans lequel la distance longitudinale est fonction d'au moins un élément parmi :
- La géométrie du véhicule ;
- La géométrie de la voie de circulation ;
- Une marge, un décalage, et/ou une valeur prédéterminée ;
- La vitesse du véhicule ;
- Les conditions de circulations.

3. Procédé de partitionnement d'une zone d'élargissement d'une voie de circulation délimitée par deux bords selon l'une des revendications 1 à 2 dans lequel la détermination (302) de la zone d'élargissement est réactualisée tant que le véhicule n'a pas quitté la zone d'élargissement (302).

4. Procédé de partitionnement d'une zone d'élargissement d'une voie de circulation délimitée par deux bords selon l'une des revendications 1 à 3 dans lequel le premier chemin de référence (212) est déterminé à partir d'un des deux bords de la voie de circulation, et le deuxième chemin de référence (213) est déterminé à partir de l'autre bord des deux bords de la voie de circulation.

5. Dispositif de partitionnement d'une zone d'élargissement d'une voie de circulation délimitée par deux bords, le dispositif comprenant une mémoire associée à au moins un processeur configuré pour mettre en oeuvre le procédé selon l'une des revendications 1 à 4.

6. Véhicule comportant le dispositif de partitionnement d'une zone d'élargissement d'une voie de circulation délimitée par deux bords selon la revendication 5.

7. Programme d'ordinateur comprenant des instructions adaptées pour l'exécution des étapes du procédé de partitionnement d'une zone d'élargissement d'une voie de circulation délimitée par deux bords selon l'une des revendications 1 à 4 lorsque ledit programme est exécuté par au moins un processeur.

## Patentansprüche

1. Verfahren zum Unterteilen einer durch zwei Kanten (202, 203) begrenzten Verbreiterungszone (202) einer Fahrspur (201), wobei das Verfahren durch eine Vorrichtung (401) implementiert wird, wobei die Vorrichtung ein so automatisiertes Fahren eines Fahrzeugs (101), des Fahrzeugs, ermöglicht von einem Fahrer entlang eines Referenzpfads gefahren werden kann, wobei das Fahrzeug auf der Fahrspur fährt, wobei das Fahrzeug eine seitliche Positionierungsunterstützung relativ zum Referenzpfad umfasst, wobei der Prozess die Schritte umfasst:
• Erkennen (301) einer bevorstehenden Aufteilung der Fahrspur in mindestens zwei neue Fahrspuren (209, 210);
• Bestimmung (302) der Verbreiterungszone (204) der Fahrspur;
• Bestimmung (303) der Referenzpfade (212, 213) in der Verbreiterungszone (204), die jeden neuen Pfad (209, 210) erreichen können;
• Berechnung (304) eines Längsabstands relativ zum Beginn der Verbreiterungszone (204), wobei der Längsabstand eine Funktion der Referenzpfade (212, 213) und der Kanten (202, 203) ist;
• Bestimmung (305) einer ersten Teilzone (207) der Aufweitungszone (204) zwischen dem Beginn der Aufweitungszone und dem Längsabstand, wobei die erste Unterzone (207) in Querrichtung durch die Kanten (202 und 203) begrenzt wird, und Bestimmung einer zweiten Unterzone (208), die dem Komplement der ersten Unterzone (207) in Bezug auf die Erweiterungszone entspricht (204);
wobei das Verfahren **dadurch gekennzeichnet ist, dass**, wenn sich das Fahrzeug (101) in der ersten Unterzone befindet, das Verfahren außerdem einen Schritt (305) zum Auswählen eines ersten Referenzpfads unter den ermittelten Referenzpfaden (212, 213) umfasst, wobei die Auswahl durchgeführt wird aus Informationen, die von mindestens einem Sensor des Fahrzeugs erfasst werden, Informationen, die von mindestens einem Sensor des Fahrzeugs erfasst werden, sind eine aktivierte Seite des Blinkers, ein anderes Fahrzeug, das vorausfährt und langsamer fährt als das Fahrzeug, eine Geschwindigkeit des Fahrzeugs, die unter einem Sollwert liegt des Fahrzeugs und/oder eine seitliche Position des Fahrzeugs in der Verbreiterungszone der Fahrspur;
Wenn sich das Fahrzeug (101) in der zweiten Unterzone (208) befindet, umfasst das Verfahren weiterhin einen Schritt (306) des Auswählens eines zweiten Referenzpfads unter den ermittelten Referenzpfaden (212, 213), wobei die Auswahl ausschließlich von dort aus erfolgt Mindestens eine Aktion am Lenkrad durch den Fahrer. Eine Aktion am Lenkrad durch den Fahrer ist eine Drehung des Lenkrads und/oder ein auf das Lenkrad ausgeübtes Drehmoment.

2. Verfahren zur Unterteilung einer Verbreiterungszone (204) einer Fahrspur (201), die durch zwei Kanten (202, 203) begrenzt wird, nach Anspruch 1, bei dem der Längsabstand eine Funktion von mindestens einem Element unter den folgenden ist:
- Fahrzeuggeometrie;
- Die Geometrie der Rollbahn;
- Eine Marge, ein Offset und/oder ein vorgegebener Wert;
- Die Geschwindigkeit des Fahrzeugs;
- Verkehrsbedingungen.

3. Verfahren zur Unterteilung einer durch zwei Kanten begrenzten Verbreiterungszone einer Fahrbahn nach einem der Ansprüche 1 bis 2, bei dem die Bestimmung (302) der Verbreiterungszone solange aktualisiert wird, bis das Fahrzeug die Verbreiterungszone (302) nicht verlassen hat ).

4. Verfahren zur Aufteilung einer durch zwei Ränder begrenzten Verbreiterungszone einer Fahrspur nach einem der Ansprüche 1 bis 3, bei dem der erste Referenzpfad (212) aus einem der beiden Ränder der Fahrspur bestimmt wird und der zweite Referenzpfad ( 213) wird vom anderen Rand der beiden Ränder der Fahrspur ermittelt.

5. Vorrichtung zur Unterteilung einer durch zwei Kanten begrenzten Verbreiterungszone einer Fahrspur, wobei die Vorrichtung einen Speicher umfasst, der mindestens einem Prozessor zugeordnet ist, der zur Durchführung des Verfahrens nach einem der Ansprüche 1 bis 4 konfiguriert ist.

6. Fahrzeug, umfassend die Vorrichtung zur Unterteilung einer durch zwei Kanten begrenzten Verbreiterungszone einer Fahrspur nach Anspruch 5.

7. Computerprogramm mit Anweisungen, die für die Ausführung der Schritte des Verfahrens zur Unterteilung einer durch zwei Kanten begrenzten Verbreiterungszone einer Fahrspur nach einem der Ansprüche 1 bis 4 geeignet sind, wenn das Programm von mindestens einem Prozessor ausgeführt wird.

## Claims

1. Method for partitioning a widening zone (202) of a traffic lane (201) delimited by two edges (202, 203), the method being implemented by a device (401), the device driving so automated a vehicle (101), the vehicle being capable of being driven by a driver, along a reference path, said vehicle traveling on said traffic lane, said vehicle comprising lateral positioning assistance relative to the reference path, said process comprising the steps:
• detection (301) of an upcoming division of said traffic lane into at least two new lanes (209, 210);
• determination (302) of the widening zone (204) of said traffic lane;
• determination (303), in said widening zone (204), of the reference paths (212, 213) capable of reaching each new path (209, 210);
• calculation (304) of a longitudinal distance relative to the start of said widening zone (204), said longitudinal distance is a function of the reference paths (212, 213) and the edges (202, 203);
• determination (305) of a first sub-zone (207) of said widening zone (204) between the start of said widening zone and said longitudinal distance, said first sub-zone (207) being limited transversely by the edges (202 and 203), and determination of a second sub-zone (208) corresponding to the complement of said first sub-zone (207) with respect to the widening zone (204);
the method being **characterized in that** when the vehicle (101) is in the first sub-zone, the method further comprises a step (305) of selecting a first reference path among the determined reference paths (212, 213) , the selection being made from information acquired by at least one sensor of said vehicle, information acquired by at least one sensor of said vehicle is an activated side of the indicator, another vehicle preceding and driving more slowly than said vehicle, a speed of said vehicle less than a setpoint of the vehicle, and/or a lateral position of said vehicle in the widening zone of said traffic lane ;
when the vehicle (101) is in the second sub-zone (208), the method further comprises a step (306) of selecting a second reference path among the determined reference paths (212, 213), the selection is made solely from at least one action on the steering wheel by the driver, an action on the steering wheel by the driver is a rotation of the steering wheel and/or a rotation torque applied to the steering wheel.

2. Method for partitioning a widening zone (204) of a traffic lane (201) delimited by two edges (202, 203) according to claim 1 in which the longitudinal distance is a function of at least one element among:
- Vehicle geometry;
- The geometry of the taxiway;
- A margin, an offset, and/or a predetermined value;
- The speed of the vehicle;
- Traffic conditions.

3. Method for partitioning a widening zone of a traffic lane delimited by two edges according to one of claims 1 to 2 in which the determination (302) of the widening zone is updated as long as the vehicle is not has not left the enlargement zone (302).

4. Method for partitioning a widening zone of a traffic lane delimited by two edges according to one of claims 1 to 3 in which the first reference path (212) is determined from one of the two edges of the traffic lane, and the second reference path (213) is determined from the other edge of the two edges of the traffic lane.

5. Device for partitioning a widening zone of a traffic lane delimited by two edges, the device comprising a memory associated with at least one processor configured to implement the method according to one of claims 1 to 4.

6. Vehicle comprising the device for partitioning a widening zone of a traffic lane delimited by two edges according to claim 5.

7. Computer program comprising instructions adapted for the execution of the steps of the method of partitioning a widening zone of a traffic lane delimited by two edges according to one of claims 1 to 4 when said program is executed by at least one processor.
